# EUROPÄISCHE PATENTSCHRIFT

(11) **EP 2 136 689 B1**
(45) Veröffentlichungstag und Bekanntmachung des Hinweises auf die Patenterteilung: **12.01.2011**
(21) Anmeldenummer: 08714796.3
(22) Anmeldetag: 03.04.2008
(51) Int. Cl.: A47J 37/12

(54) **FRITEUSENANORDNUNG**
DEEP FRYER ARRANGEMENT
AGENCEMENT FRITEUSE

(30) Priorität: 13.04.2007 CH 611072007
(43) Veröffentlichungstag der Anmeldung: 30.12.2009
(73) Patentinhaber: Maurer, Ulrich, 8304 Wallisellen (CH)
(72) Erfinder: Maurer, Ulrich, 8304 Wallisellen (CH)
(74) Vertreter: Hasler, Erich
(86) Internationale Anmeldenummer: PCT/CH2008/000146
(87) Internationale Veröffentlichungsnummer: WO 2008/124954

(56) Entgegenhaltungen:
- EP-A- 1 025 787
- WO-A-2004/014206
- US-A- 3 685 432
- US-A- 4 228 730
- US-A1- 2003 205 028

## Beschreibung

### Gebiet der Erfindung

Die vorliegende Erfindung betrifft einen Frittierautomaten gemäss Oberbegriff von Anspruch 1 und ein Verfahren zum Betreiben eines Frittierautomaten gemäss Oberbegriff des Anspruchs 16.

### Stand der Technik

Durch die WO 2004/014206 ist eine Friteuse offenbart mit einem Vorratsbehälter und einer über ein Förderrohr mit dem Vorratsbehälter verbundener Gartrommel, in welcher ein drehbarer Wender angeordnet ist. Im Betrieb wird Gargut, z.B. gefrorene Pommes frites, vom Vorratsbehälter in die verflüssigtes Garfett enthaltene Gartrommel befördert, wo es mittels des langsam drehenden Wenders in eine Austragstrommel mit abfördernder Förderrutsche transportiert wird. Dabei ist die Drehgeschwindigkeit des Wenders so gewählt, dass das Gargut während der Verweilzeit in der Gartrommel durchgegart wird.

Bei der Friteuse der WO 2004/014206 ist der Vorratsbehälter für das Gargut oberhalb der Gartrommel angeordnet. Dies hat den Vorteil, dass das Gargut mittels Schwerkraft in die Gartrommel gefördert werden kann. Ein Nachteil dieser Anordnung ist jedoch, dass aufsteigender, heisser Wasserdampf in den gekühlten Vorratsbehälter gelangen kann, wo er bei den dort herrschenden Temperaturen sofort wieder vereist. Dies kann dazu führen, dass das Gargut an den kalten Wänden des Vorratsbehälters, dessen Austrittsöffnung und/oder des Förderrohrs festklebt und der Transport gestört wird.

### Aufgabe der Erfindung

Ausgehend von dieser unbefriedigenden Situation stellt sich die Erfindung zur Aufgabe, eine Friteusenanordnung vorzuschlagen, bei welcher die eingangs erwähnten Probleme nicht auftreten. Bei dem Frittierautomaten soll - gegenüber bekannten Frittierautomaten - die Betriebssicherheit erhöht und der Reinigungsaufwand verringert sein. Insbesondere ist es ein Ziel, eine kompakte Friteusenanordnung vorzuschlagen, sodass die Friteuse auch in beengten Verhältnissen aufgestellt werden kann. Noch ein Ziel ist es, eine Friteuse vorzuschlagen, mit welcher Gargut schonend gegart werden kann.

### Beschreibung

Erfindüngsgemäss wird die Aufgabe durch eine Vorrichtung gemäss Anspruch 1, bzw. durch ein Verfahren nach Anspruch 16 gelöst.

Bekannte Frittierautomaten sind mit einem Vorratsbehälter für das Gargut ausgerüstet, an dem eine Austrittsöffnung vorgesehen ist. Sie besitzen ferner eine Gartrommel zur Aufnahme von flüssigem Fett oder Öl mit einer Eintragsöffnung und einer Austragsöffnung. In der Gartrommel ist ein drehbarer Wender zur Förderung des Garguts in der Gartrommel vorgesehenen. Ferner sind Fördermittel zum Fördern von Gargut von der Austrittsöffnung des Vorratsbehälters zur Eintragsöffnung der Gartrommel vorgesehen.

Die Fördermittel bestehen bei den bekannten Frittierautomaten aus Leitkanälen, in denen das Gargut unter dem Einfluss der Schwerkraft von der Austrittsöffnung des über der Gartrommel angeordneten Vorratsbehälters zur Eintragsöffnung der Gartrommel hinunter gleiten.

Von solchen Frittierautomaten unterscheidet sich der erfindungsgemässe Frittierautomat dadurch, dass in Betriebsstellung des Frittierautomaten die Austrittsöffnung des Vorratsbehälters unterhalb der Eintragsöffnung der Gartrommel angeordnet ist. Zweckmässigerweise ist der Vorratsbehälter insgesamt unterhalb der Gartrommel angeordnet. Weiter unterscheidet er sich dadurch, dass die Fördermittel mit einem Antrieb ausgebildet sind, um das Gargut von der Austrittsöffnung des Vorratsbehälters zur Eintragsöffnung der Gartrommel hinauf zu transportieren.

Die Anordnung der Austrittsöffnung unterhalb der Eintragsöffnung, bzw. des Vorratsbehälters unter der Gartrommel hat den Nachteil, dass ein Antrieb vorgesehen sein muss, um das Gargut der Gartrommel zuführen zu können. Diese Anordnung hat aber die Vorteile, dass der von der Gartrommel aufsteigende Dampf nicht an der Austrittsöffnung des Vorratsbehälters vorbeigeführt zu werden braucht und somit nicht in die Leitkanäle und zur Austrittsöffnung am Vorratsbehälter gelangen kann. Es kann daher dank dieser Massnahme eine Verkrustung der Austrittsöffnung und der Fördermittel durch Fettablagerungen vermieden und eine Eisbildung im Bereich der Austrittsöffnung wesentlich vermindert werden.

Das durch die erfindungsgemässe Anordnung bedingte angetriebene Fördermittel kann weiter vorteilhaft zum Portionieren und Wägen des Gargutes genutzt werden. Zweckmässigerweise besitzen die Fördermittel wenigstens einen beweglichen Förderbehälter. Dieser Förderbehälter ist von einer unteren Endstellung in eine obere Endstellung beweglich. In der unteren Endstellung befindet er sich unter der Austrittsöffnung des Vorratsbehälters, in der oberen Endstellung oberhalb der Eintragsöffnung der Gartrommel.

Der Förderbehälter kann mit einer Wägeinrichtung ausgerüstet sein. Die Wägeinrichtung ist zweckmässigerweise mit einer Steuerung eines Verschlusses der Austrittsöffnung verbunden, so dass die in den Förderbehälter ausgegebene Menge an Gargut gesteuert werden kann.

Zum Wägen des Inhaltes des Förderbehälters ist bevorzugt im Bereich der unteren Endstellung der Fördermittel eine Waage vorgesehen, auf welcher der Förderbehälter in der unteren Endstellung ruhen kann. Alternativ ist die Waage zwischen dem Förderbehälter und einer Aufhängung des Förderbehälters ausgebildet.

Der wenigstens eine Förderbehälter ist zweckmässigerweise an wenigstens einer Führungsschiene angeordnet ist. Dies erlaubt eine präzise Führung des Förderbehälters von der unteren zur oberen Endstellung und umgekehrt.

Zweckmässigerweise ist der Förderbehälter in seiner oberen Endstellung schwenk- oder kippbar. Dies kann durch eine entsprechende Ausbildung der Führungsschiene und mit dieser zusammenwirkenden Mitteln am Förderbehälter erreicht werden, Es kann der Förderbehälter aber auch mit einem von der Führungsschiene unabhängigen Schwenkmechanismus verschwenkbar ausgebildet sein. Das Schwenken erlaubt ein einfaches und schonendes Befördern des Gargutes in eine Aufnahme bei der Eintragsöffnung der Gartrommel.

Vorteilhaft ist der Förderbehälter an einem entlang der Führungsschiene beweglichen Schlitten angeordnet. Zwischen diesem Schlitten und dem Förderbehälter kann die Wägeinrichtung wie auch die Schwenkeinrichtung vorgesehen sein.

Vorteilhaft ist der Schlitten durch Transportmittel, z.B. eine Spindel, ein Zahnriemen oder eine Kette, bewegbar, die mittels eines Elektromotors angetrieben sind. Der Schlitten steht dazu in Wirkverbindung mit diesem Transportmittel und ist in der Führungsschiene geführt.

Zweckmässigerweise ist am oberen Ende der Führungsschiene ein Leitelement vorgesehen, um mit dem Förderbehälter zusammenwirkend die Förderbewegung des Förderbehälters für die Erzeugung einer Schwenkbewegung des Förderbehälters zu nutzen. Dadurch wird der Förderbehälter vor dem Erreichen der Entstellung gekippt, so dass das darin geförderte Gargut aus dem Förderbehälter in eine Aufnahme vor der Eintragsöffnung oder direkt in die Eintragsöffnung gleitet. Vorteilhaft wird die Eintragsöffnung erst geöffnet, wenn der Förderbehälter sich aus der oberen Endstellung entfernt hat, damit der Förderbehälter nicht in Kontakt mit austretenden Fett- und Wasserdämpfen gelangt.

In an sich bekannter Art ist der Vorratsbehälter vorzugsweise ein Tiefkühlbehälter. Dies erlaubt den Inhalt des Vorratsbehälters optimal aufzubewahren und gewährleistet gleichbleibende Voraussetzungen bezüglich der Temperatur bei jeder Portion des Garguts.

In einer bevorzugten Ausführungsform sind bei dem Frittierautomaten der Vorratsbehälter, die Gartrommel und die Fördermittel innerhalb eines gemeinsamen Gehäuses angeordnet. Dabei ist zweckmässigerweise der Vorratsbehälter gegenüber dem Gehäuse verschieblich angeordnet, um in einer aus dem Gehäuse herausgezogenen Position befüllt oder gewechselt werden zu können. In einer in das Gehäuse hineingeschobenen Position mündet die Austrittsöffnung in den in der unteren Endposition befindlichen Förderbehälter. Der Vorratsbehälter kann dazu auf Rollen angeordnet sein, die in einer Schiene geführt sind, so dass das Herausziehen und das Hineinschieben des Vorratsbehälters ohne Widerstand erfolgen kann und der Vorratsbehälter dabei präzise platziert werden kann. Es können auch mehrere Vorratsbehälter vorgesehen sein, die austauschbar sind. Ein Vorteil der Anordnung des Vorratsbehälters unterhalb der Gartrommel besteht daher auch darin, dass der Vorratsbehälter über den Boden gefahren werden kann. Er kann daher dem Gehäuse entnommen werden, ohne dass er dazu getragen zu werden braucht.

Zweckmässigerweise ist eine Steuerung vorgesehen. Diese dient zur Synchronisation des Transports des Garguts vom Vorratsbehälter zur Gartrommel in Abhängigkeit der Drehgeschwindigkeit des Wenders einerseits und der Anzahl der Gargut-Portionen, die der Wender aufnehmen kann, andererseits. Die Steuerung kann auch sicherstellen, dass die Austrittsöffnung des Vorratsbehälters nur Offenbar ist, wenn der Förderbehälter in der unteren Endstellung ist. Wenn die Drehgeschwindigkeit des Wenders und damit die Verweilzeit des Garguts in der Gartrommel einstellbar ist, ist die Garzeit auf das Gargut und das gewünschte Garergebnis abstimmbar.

Mit einem solchen, einen Vorratsbehälter aufweisenden Frittierautomaten wird eine Gartrommel betrieben, indem das Gargut aus dem Vorratsbehälter in die Gartrommel gefördert wird, in der Gartrommel gegart und das fertig gegarte Gargut aus der Gartrommel ausgetragen wird. Im Unterschied zu bekannten Verfahren wird erfindungsgemäss jedoch das Gargut mittels angetriebener Fördermittel von einer Austrittsöffnung des in Betriebsstellung unter der Gartrommel angeordneten Vorratsbehälters zu einer Eintragsöffnung der Gartrommel hinauf transportiert. Das befördern des Gargutes von unten nach oben ist Bedingung, um den Vorratsbehälter unter der Gartrommel anordnen zu können und bedingt, dass die Austrittsöffnung unterhalb der Eintragsöffnung angeordnet ist. Das Verfahren zeitigt Vorteile bezüglich der Betriebssicherheit der Vorrichtung, da die Austrittsöffnung des Vorratsbehälters und die Fördermittel von Fettdämpfen und Wasserdampf ferngehalten sind.

Zweckmässigerweise wird das Gargut aus der Austrittsöffnung in einen Förderbehälter geleitet, der Förderbehälter zur Eintragsöffnung hinauf gefördert, und das Gargut aus dem Förderbehälter in die Eintragsöffnung geleitet. Dies hat den Vorteil gegenüber beispielsweise einer Schnecken- oder Bandförderung, dass auch der Förderbehälter nicht dem Fettdampf ausgesetzt zu werden braucht, sondern vor einem Öffnen der Eintragsöffnung wieder von dieser entfernt werden kann.

Mit einer Steuerung können die Öffnungszeiten der verschliessbaren Austrittsöffnung des Vorratsbehälters und die Transportbewegung des Förderbehälters aufeinander abgestimmt werden. Das aus dem Vorratsbehälter ausgestossene Gargut wird mit Vorteil gewogen, insbesondere im Transportbehälter gewogen. Das Wägen erlaubt eine stets gleiche oder wechselnde Portionierung des Garguts.

Es kann in einer vorteilhaften Ausführungsform das Gewicht der herzustellenden Portionen an einem Terminal eingegeben werden. Danach wird die Portion durch automatische Steuerung eines Verschlusses der Austrittsöffnung der Eingabe entsprechend bemessen. Dies erlaubt eine individuelle Portionierung des Garguts.

Die Erfindung wird nachfolgend unter Bezugnahme auf die Figuren anhand eines

Anwendungsbeispiels näher im Detail beschrieben. Dabei sind in den Figuren für gleiche Teile jeweils gleiche Bezugsziffern verwendet. Es zeigt:
- Fig. 1: eine perspektivische Darstellung eines erfindungsgemässen Frittierautomaten ohne Gehäuse.

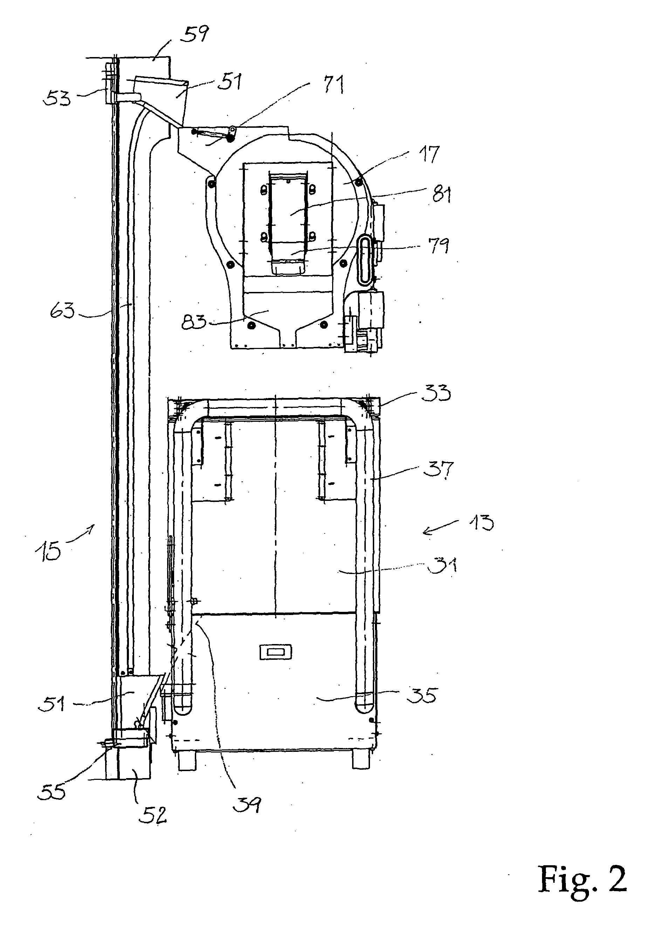

- Fig. 2: eine Frontalansicht des Frittierautomaten.
- Fig. 3: eine Seitenansicht des Frittierautomaten.
- Fig. 4: eine perspektivische Darstellung des Frittierautomaten in einem Gehäuse.

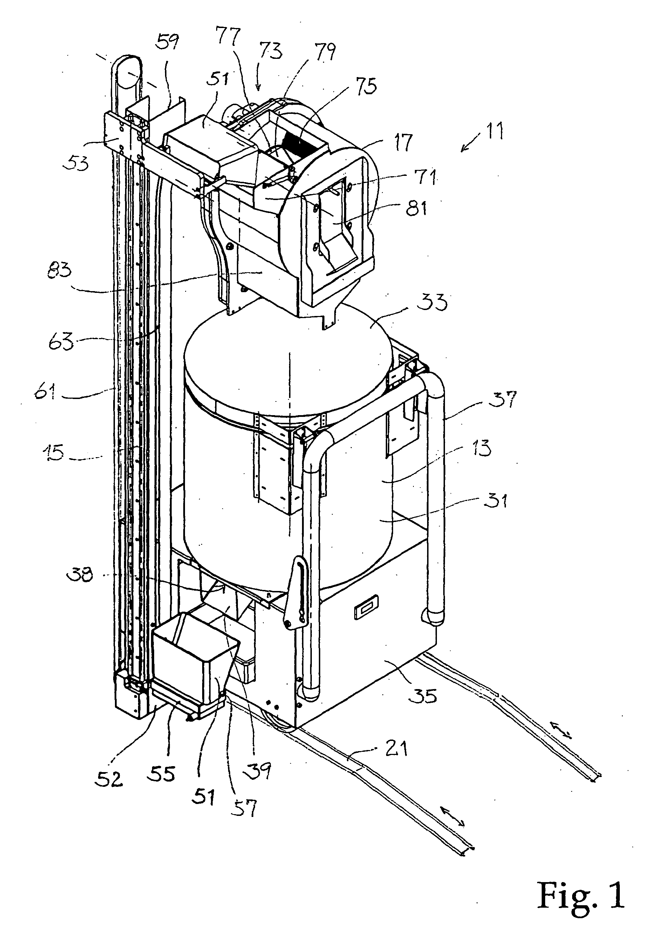

In der Figur 1 ist der Frittierautomat 11 ohne Gehäuse dargestellt, um den Vorratsbehälter 13, das angetriebene Fördermittel 15 und die Gartrommel 17 und deren gegenseitige Ausrichtung besser sichtbar zu machen.

Der Vorratsbehälter weist eine zylindrische Tonne mit Behälterteil 31 und Deckel 33 auf. Zum Befüllen der Tonne kann der Deckel 33 aufgeklappt werden. Das Behälterteil 31 sitzt auf einem fahrbaren Sockel 35. Dieser ist mit einer Führungsstange 37 ausgerüstet, um den Vorratsbehälter 13 verfahren zu können. Diese Führungsstange 37 ist in eine eingeklappte Stellung gemäss den Figuren und eine ausgeklappte Stellung klappbar. In der ausgeklappten Stellung steht die Führungsstange vom Sockel schräg aufsteigen weg, damit der Sockel 35 mit dem Vorratsbehälter 13 gut manövriert werden kann.

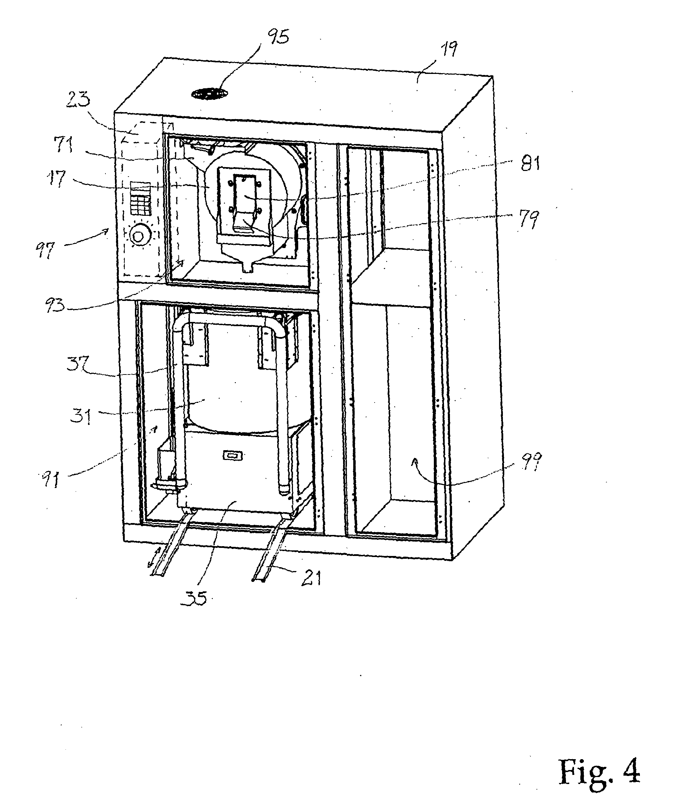

Der Sockel 35 steht mit seinen Rädern in einer Schiene 21, damit er automatisch richtig platziert ist. Diese Schiene 21 ist teleskopisch ausziehbar, damit der gesamte Vorratsbehälter 13 aus dem schrankartigen Gehäuse 19 gemäss Figur 4 herausfahrbar und hineinfahrbar ist.

Im Sockel 35 ist ein Kühlaggregat zum Kühlen des Innenraums des Vorratsbehälters 13, sowie eine Vorrichtung zum Öffnen und Schliessen der Austrittsöffnung des Vorratsbehälters 13 vorhanden. Der Sockel ist dazu mit einem oder zwei nicht dargestellten Kabeln an eine Stromquelle und eine Steuerung des Frittierautomaten anschliessbar.

Die Austrittsöffnung 38 ist im Behälterboden ausgebildet. Sie mündet in eine Rutsche 39, von der das herausrutschende Gargut in einen Förderbehälter 51 fällt. Der Förderbehälter ist in Figur 1 in seiner unteren Endstellung und in seiner oberen Endstellung dargestellt. Es ist beim Frittierautomaten jedoch lediglich ein einziger Förderbehälter vorhanden. Der Förderbehälter 51 ist an einem Schlitten 53 befestigt. Er ist am Schlitten 53 schwenkbar gelagert. Der Schlitten 53 ist seitlich neben dem Förderbehälter 51 angeordnet, so dass der Boden des Förderbehälters in der unteren Endstellung auf einer Wägeinrichtung 55 aufliegen kann. Damit die Wägeinrichtung nicht durch den Antrieb der Fördermittel belastet wird, ist der Förderbehälter gegenüber einem Antriebsmittel vertikal verschieblich gelagert. Er sitzt im dargestellten Beispiel mit einer Schwenkachse 57 vertikal verschieblich in einer Schwenkachsnabe an Schlitten 53.

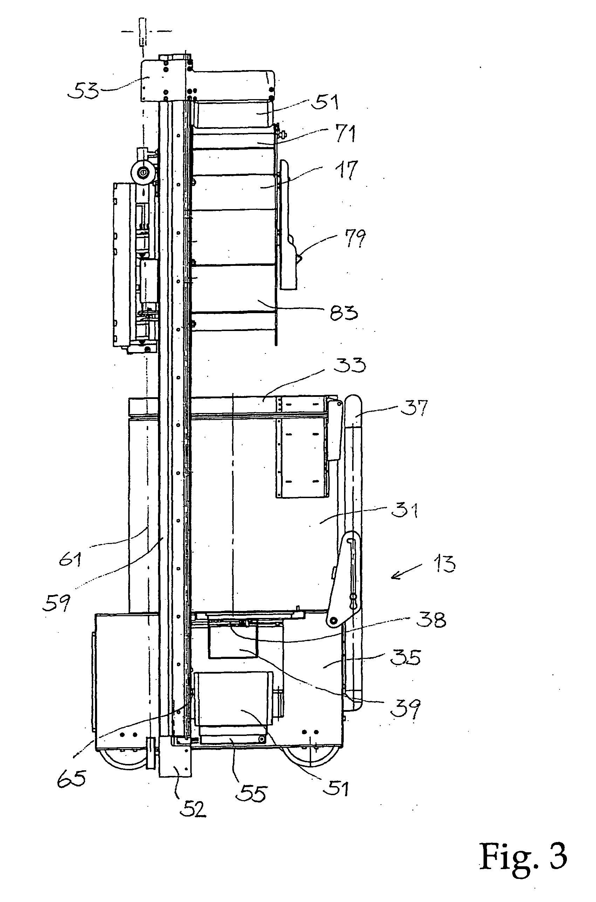

Der Schlitten ist entlang einer Führungs- und Förderschiene 59 geführt. Diese weist einen angetriebenen Riemen 61 auf, an welchem der Schlitten 53 befestigt ist, und mit welchem der Schlitten 53 von einer in die andere Endstellung gefördert wird. In der Führungsschiene 59 ist eine Behälterführung 63 vorhanden. Am Förderbehälter 51 ist eine Führungsstift 65 (Fig. 3) vorhanden, der in diese Behälterführung 63 eingreift. Durch die Position des Führungsstifts 65 in der Behälterführung 63 relativ zur Schwenkachse zwischen Förderbehälter 51 und Schlitten 53 ist die Schwenkstellung des Förderbehälters 51 bestimmt. Die Behälterführung 63 ist im Bereich der oberen Endstellung des Förderbehälters 51 gekrümmt. Dadurch wird der Förderbehälter beim Annähern dieser Endstellung aus der aufrechten Förderstellung in eine verschwenkte Eintragsstellung verschwenkt. In dieser Eintragsstellung gleitet das im Förderbehälter vorhandene Gargut in eine Aufnahme 71 vor der Eintragsöffnung 73 der Gartrommel 17.

Die Gartrommel 17 besteht im Wesentlichen aus einem liegenden, zylindrischen Behälter mit einer oberen Eintragsöffnung 73, einem ringraumförmigen Garraum, durch den das Gargut mit einem um die Achse des zylindrischen Behälters drehbaren Wender 75 hindurchgefördert wird. Der Wender teilt den Garraum in eine Mehrzahl von Garkammern ab. Diese Garkammern werden eine nach der anderen durch die Eintragsöffnung bestückt mit Gargut, drehen sich (in Fig.1 im Gegenuhrzeigersinn) um einen Zentralkörper 77 herum durch den ringförmigen Garraum und gelangen schliesslich über den Zentralkörper 77. Der Garraum ist im unteren Bereich der Gartrommel mit Frittieröl gefüllt, so dass das Gargut mit dem Wender durch das im Betrieb heisse Frittieröl gefördert werden.

Ist das Gargut über dem Zentralkörper 77 angelangt, fällt es dort auf eine Rutsche 79 im Zentralkörper. Diese Rutsche führt aus der Gartrommel 17 heraus. Durch Öffnen der Türe 81 kann das gegarte Gut dem Zentralkörper 77 entnommen werden. Unterhalb des zylindrischen Behälters der Gartrommel 17 ist ein Ölreservoir 83 angegliedert, in welchem die Heizung zum Erhitzen des Frittieröls angeordnet ist.

Wie aus der Figur 4 ersichtlich ist, wird der Frittierautomat 11 zweckmässigerweise in einem schrankartigen Gehäuse 19 untergebracht. Dieses weist ein unteres Fach 91 für den Vorratsbehälter 13 und ein oberes Fach 93 für die Gartrommel auf. Die Führungsschiene des Fördermittels reicht vom unteren Fach 91 ins obere Fach 93. Im oberen Fach 93 ist ein Abzug 95 für die aus der Eintragsöffnung 73 entweichenden Dämpfe ausgebildet.

In einem nicht dargestellten Verschlussteil für das obere Fach 93 ist eine Öffnung vorhanden, durch welche die Rutsche 79 aus dem Gehäuse 19 hinausreicht und die Türe 81 bedienbar ist. Diese Öffnung ist zweckmässigerweise in einer Nische angeordnet, die im Verschlussteil ausgebildet ist.

Im Gehäuse 19 ist weiter eine Steuerung 23 untergebracht, die über Bedienelemente 97 beeinflusst werden kann. Die Bedienelemente 97 sind auf der Oberfläche des Gehäuses 19 angeordnet. Die Steuerung stimmt die Bewegung des Förderbehälters auf den Rhythmus des Wenders ab und steuert die Zuführung von Gargut zum Förderbehälter in der gewünschten Menge.

Das Gehäuse 19 kann weitere Fächer 99 zur Aufnahme von Verpackungsmaterial, Servietten, Zutaten und dergleichen aufweisen.

## Patentansprüche

1. Frittierautomat (21) mit
einem Vorratsbehälter (13) für das Gargut mit einer Austrittsöffnung (38),
- einer Gartrommel (17) zur Aufnahme von flüssigem Fett oder Öl mit einer Eintragsöffnung (73) und einer Austragsöffnung (81);
- einem in der Gartrommel vorgesehenen drehbaren Wender (75) zur Förderung des Garguts in der Gartrommel
- Fördermitteln (15) zum Fördern von Gargut von der Austrittsöffnung (38) des Vorratsbehälters (13) zur Eintragsöffnung (73) der Gartrommel (17), **dadurch gekennzeichnet,**
- **dass** in Betriebsstellung des Frittierautomaten (11) die Austrittsöffnung des Vorratsbehälters (13) unterhalb der Eintragsöffnung (73) der Gartrommel (17) angeordnet ist, und
- **dass** die Fördermittel (15) mit einem Antrieb (52,61) ausgebildet sind, um das Gargut von der Austrittsöffnung (38) des Vorratsbehälters (13) zur Eintragsöffnung (73) der Gartrommel (17) hinauf zu transportieren.

2. Frittierautomat nach Anspruch 1, **dadurch gekennzeichnet, dass** die Fördermittel (15) wenigstens einen beweglichen Förderbehälter (51) besitzen, welcher von einer unteren Endstellung, in welcher der Förderbehälter (51) sich unterhalb der Austrittsöffnung (38) des Vorratsbehälters (13) befindet, in eine obere Endstellung, in welcher der Förderbehälter (51) sich oberhalb der Eintragsöffnung (73) der Gartrommel (17) befindet, beweglich ist.

3. Frittierautomat nach Anspruch 2, **dadurch gekennzeichnet, dass** im Bereich der unteren Endstellung des Förderbehälters (51) eine Wägeinrichtung (55) vorgesehen ist, auf welcher der Förderbehälter (51) in der unteren Endstellung ruhen kann.

4. Frittierautomat nach Anspruch 2 oder 3, **dadurch gekennzeichnet, dass** der Förderbehälter (51) an wenigstens einer Führungsschiene (59) angeordnet ist.

5. Frittierautomat nach einem der Ansprüche 2 bis 4, **dadurch gekennzeichnet, dass** der Förderbehälter (51) in seiner oberen Endstellung schwenk- oder kippbar ist.

6. Frittierautomat nach einem der Ansprüche 2 bis 5, **dadurch gekennzeichnet, dass** der Förderbehälter (51) an einem beweglichen Schlitten (53) angeordnet ist, welcher Schlitten (53) vorzugsweise durch eine mittels eines Elektromotors (52) angetriebene Spindel oder einen Zahnriemen (61) bewegbar ist.

7. Frittierautomat nach einem der Ansprüche 4 bis 6, **dadurch gekennzeichnet, dass** am oberen Ende der Führungsschiene (59) ein Leitelement (63) vorgesehen ist, um mit dem Förderbehälter (51) zusammenwirkend die Förderbewegung des Förderbehälters für die Erzeugung einer Schwenkbewegung des Förderbehälters (51) zu nutzen.

8. Frittierautomat nach einem der Ansprüche 1 bis 7, **dadurch gekennzeichnet, dass** der Vorratsbehälter (13) vorzugsweise ein Tiefkühlbehälter ist, und der Vorratsbehälter (13), die Gartrommel (17) und die Fördermittel (15) innerhalb eines gemeinsamen Gehäuses (19) angeordnet sind.

9. Frittierautomat nach Anspruch 8, **dadurch gekennzeichnet, dass** der Vorratsbehälter (13) gegenüber dem Gehäuse (19) verschieblich angeordnet ist, um in einer aus dem Gehäuse herausgezogenen Position befüllt oder gewechselt werden zu können, wobei in einer in das Gehäuse (19) hineingeschobenen Position die Austrittsöffnung (38) in den in der unteren Endposition befindlichen Förderbehälter (51) mündet.

10. Frittierautomat nach einem der Ansprüche 1 bis 9, **dadurch gekennzeichnet, dass** eine Steuerung (23) vorgesehen ist zur Synchronisation des Transports des Garguts vom Vorratsbehälter (13) zur Gartrommel (17) in Abhängigkeit der Drehgeschwindigkeit des Wenders (75) und der Anzahl der Gargut-Portionen, die der Wender aufnehmen kann.

11. Verfahren zum Betreiben eines eine Gartrommel (17) und einen Vorratsbehälter (13) aufweisenden Frittierautomaten (11), bei welchem das Gargut aus dem Vorratsbehälter (13) in die Gartrommel (17) gefördert wird, in der Gartrommel gegart und das fertig gegarte Gargut aus der Gartrommel (17) ausgetragen wird, **dadurch gekennzeichnet, dass** das Gargut mittels angetriebener Fördermittel (15) von einer in Betriebsstellung unter der Gartrommel (17) angeordneten Austrittsöffnung (38) des Vorratsbehälters (13) zu einer Eintragsöffnung (73) der Gartrommel hinauf transportiert wird.

12. Verfahren nach Anspruch 11, **dadurch gekennzeichnet, dass** das Gargut aus der Austrittsöffnung (38) in einen Förderbehälter (51) geleitet wird, der Förderbehälter (51) zur Eintragsöffnung (73) hinauf gefördert wird, und das Gargut aus dem Förderbehälter (51) in die Eintragsöffnung (73) geleitet wird.

13. Verfahren nach Anspruch 11 oder 12, **dadurch gekennzeichnet, dass** die Öffnungszeiten der verschliessbaren Austrittsöffnung (38) des Vorratsbehälters und die Transportbewegung des Förderbehälters (51) aufeinander abgestimmt sind.

14. Verfahren nach einem der Ansprüche 11 bis 13, **dadurch gekennzeichnet, dass** das aus dem Vorratsbehälter (13) ausgestossene Gargut vorzugsweise im Transportbehälter (51) gewogen wird.

15. Verfahren nach einem der Ansprüche 11 bis 14, **dadurch gekennzeichnet, dass** das Gewicht der herzustellenden Portionen an einem Terminal (97) eingegeben und die Portion durch automatische Steuerung eines Verschlusses der Austrittsöffnung (38) der Eingabe entsprechend bemessen wird.

## Claims

1. An automated fryer (11) having a storage container (13) for the food, said storage container having an outlet opening (38),
- a cooking drum (17) for accommodating liquid fat or oil, said cooking drum having a loading opening (73) and a removal opening (81);
- a rotatable turner (75) provided in the cooking drum for moving the food in the cooking drum
- and transport means (15) for transporting the food from the outlet opening (38) of the storage container (13) to the loading opening (73) of the cooking drum (17), **characterized in that**
- in the operating position of the automated fryer (11), the outlet opening of the storage container (13) is located below the loading opening (73) of the cooking drum (17), and
- **in that** the transport means (15) is designed to comprise a drive (52, 61) in order to transport the food upward from the outlet opening (38) of the storage container (13) to the loading opening (73) of the cooking drum (17).

2. The automated fryer as claimed in claim 1, **characterized in that** the transport means (15) has at least one moveable transport container (51), which is moveable from a bottom end position, in which the transport container (51) is situated below the outlet opening (38) of the storage container (13), into a top end position, in which the transport container (51) is situated above the loading opening (73) of the cooking drum (17).

3. The automated fryer as claimed in claim 2, **characterized in that** a weighing device (55) is provided in the region of the bottom end position of the transport container (51), the transport container (51) being able to rest on said weighing device in the bottom end position.

4. The automated fryer as claimed in claim 2 or 3, **characterized in that** the transport container (51) is located on at least one guide rail (59).

5. The automated fryer as claimed in one of claims 2 to 4, **characterized in that** the transport container (51) is pivotable or tiltable in its top end position.

6. The automated fryer as claimed in one of claims 2 to 5, **characterized in that** the transport container (51) is located on a moveable carriage (53) which is moveable by means of a spindle or a toothed belt (61) that is driven by means of an electric motor (52).

7. The automated fryer as claimed in one of claims 4 to 6, **characterized in that** a guide element (63) is provided at the top end of the guide rail (59) in order, interacting with the transport container (51), to utilize the transport movement of the transport container for generating a pivotal movement of the transport container (51).

8. The automated fryer as claimed in one of claims 1 to 7, **characterized in that** the storage container (13) is a freezer container and the storage container (13), the cooking drum (17) and the transport means (15) are located within a common housing (19).

9. The automated fryer as claimed in claim 8, **characterized in that** the storage container (13) is located so as to be displaceable relative to the housing (19) in order to be able to be filled or changed in a position pulled out of the housing, wherein in a position pushed into the housing (19), the outlet opening (38) opens out into the transport container (51) that is located in the bottom end position.

10. The automated fryer as claimed in one of claims 1 to 9, **characterized in that** a control means (23) is provided for synchronizing the transport of the food from the storage container (13) to the cooking drum (17) in dependence on the rotational speed of the turner (75) and on the number of food portions that the turner can accommodate.

11. A method for operating an automated fryer (11) that includes a cooking drum (17) and a storage container (13), where the food is moved out of the storage container (13) into the cooking drum (17), is cooked in the cooking drum and the ready cooked food is discharged out of the cooking drum (17), **characterized in that** the food is transported upward by means of driven transport means (15) from an outlet opening (38) of the storage container (13) that is located below the cooking drum (17) in the operating position to a loading opening (73) of the cooking drum.

12. The method as claimed in claim 11, **characterized in that** the food is guided out of the outlet opening (38) into a transport container (51), the transport container (51) is moved upward towards the loading opening (73) and the food is guided out of the transport container (51) into the loading opening (73).

13. The method as claimed in claim 11 or 12, **characterized in that** the opening times of the closable outlet opening (38) of the storage container and the transport movement of the transport container (51) are co-ordinated with one another.

14. The method as claimed in one of claims 11 to 13, **characterized in that** the food discharged from the storage container (13) is weighed, in particular is weighed in the transport container (51).

15. The method as claimed in one of claims 11 to 14, **characterized in that** the weight of the portions to be produced is input at a terminal (97) and the portion is measured, corresponding to the input, by automatically controlling a closure of the outlet opening (38).

## Revendications

1. Friteuse automatique (11) avec
un réservoir de stockage (13) pour les aliments à cuire avec une ouverture de sortie (38),
- un tambour de cuisson (17) pour recevoir de la graisse liquide ou de l'huile avec une ouverture d'entrée (73) et une ouverture de sortie (81) ;
- un retourneur rotatif (75) prévu dans le tambour de cuisson pour amener les aliments à cuire dans le tambour de cuisson,
- des moyens d'alimentation (15) pour amener les aliments à cuire de l'ouverture de sortie (38) du réservoir de stockage (13) à l'ouverture d'entrée (73) du tambour de cuisson (17), **caractérisée en ce**
- **qu'**en position de fonctionnement de la friteuse automatique (11) l'ouverture de sortie du réservoir de stockage (13) est placée en dessous de l'ouverture d'entrée (73) du tambour de cuisson (17) et
- **que** les moyens d'alimentation (15) sont configurés avec un entraînement (52, 61) pour transporter les aliments à cuire de l'ouverture de sortie (38) du réservoir de stockage (13) vers le haut à l'ouverture d'entrée (73) du tambour de cuisson (17).

2. Friteuse automatique selon la revendication 1, **caractérisée en ce que** les moyens d'alimentation (15) possèdent au moins un réservoir d'alimentation mobile (51) qui est mobile d'une position d'extrémité inférieure, dans laquelle le réservoir d'alimentation (51) se trouve en dessous de l'ouverture de sortie (38) du réservoir de stockage (13), à une position d'extrémité supérieure dans laquelle le réservoir d'alimentation (51) se trouve au-dessus de l'ouverture d'entrée (73) du tambour de cuisson (17).

3. Friteuse automatique selon la revendication 2, **caractérisée en ce qu'**il prévu un dispositif de pesée (55) dans la zone de la position d'extrémité inférieure du réservoir d'alimentation (51), dispositif de pesée sur lequel le réservoir d'alimentation (51) peut reposer dans la position d'extrémité inférieure.

4. Friteuse automatique selon la revendication 2 ou 3, **caractérisée en ce que** le réservoir d'alimentation (51) est placé sur au moins un rail de guidage (59).

5. Friteuse automatique selon l'une des revendications 2 à 4, **caractérisée en ce que** le réservoir d'alimentation (51) dans sa position d'extrémité supérieure peut pivoter ou basculer.

6. Friteuse automatique selon l'une des revendications 2 à 5, **caractérisée en ce que** le réservoir d'alimentation (51) est placé sur une coulisseau mobile (53), lequel coulisseau (53) est mobile de préférence par un arbre entraîné au moyen d'un moteur électrique (52) ou par une courroie dentée (61).

7. Friteuse automatique selon l'une des revendications 4 à 6, **caractérisée en ce qu'**il est prévu, à l'extrémité supérieure du rail de guidage (59), un élément de direction (63) pour utiliser, en coopérant avec le réservoir d'alimentation (51), le mouvement d'alimentation du réservoir d'alimentation pour produire un mouvement de pivotement du réservoir d'alimentation (51).

8. Friteuse automatique selon l'une des revendications 1 à 7, **caractérisée en ce que** le réservoir de stockage (13) est de préférence un réservoir de congélation et que le réservoir de stockage (13), le tambour de cuisson (17) et les moyens d'alimentation (15) sont placés à l'intérieur d'un bâti commun (19).

9. Friteuse automatique selon la revendication 8 **caractérisée en ce que** le réservoir de stockage (13) est placé translatable par rapport au bâti (19) pour pouvoir être rempli ou remplacé dans une position sortie du bâti, cependant que dans une position rentrée dans le bâti (19) l'ouverture de sortie (38) débouche dans le réservoir de stockage (51) qui se trouve dans la position d'extrémité inférieure.

10. Friteuse automatique selon l'une des revendications 1 à 9, **caractérisée en ce qu'**il est prévu une commande (23) pour la synchronisation du transport des aliments à cuire du réservoir de stockage (13) au tambour de cuisson (17) en fonction de la vitesse de rotation du retourneur (75) et du nombre de portions d'aliments à cuire que le retourneur peut prendre.

11. Procédé pour faire fonctionner une friteuse automatique (11) qui présente un tambour de cuisson (17) et un réservoir de stockage (13) pour laquelle les aliments à cuire sont alimentés du réservoir de stockage (13) dans le tambour de cuisson (17), sont cuits dans le tambour de cuisson et les aliments à cuire qui ont fini de cuire sont sortis du tambour de cuisson (17), **caractérisée en ce que** les aliments à cuire sont transportés au moyen de moyens d'alimentation entraînés (15) d'une ouverture de sortie (38) du réservoir de stockage (13) qui est placée en position de fonctionnement sous le tambour de cuisson (17) vers le haut à une ouverture d'entrée (73) du tambour de cuisson.

12. Procédé selon la revendication 11, **caractérisé en ce que** les aliments à cuire sont guidés de l'ouverture de sortie (38) dans un réservoir d'alimentation (51), le réservoir d'alimentation (51) est transporté vers le haut vers l'ouverture d'entrée (73) et les aliments à cuire sont guidés du réservoir d'alimentation (51) à l'ouverture d'entrée (73).

13. Procédé selon la revendication 11 ou 12, **caractérisé en ce que** les temps d'ouverture de l'ouverture de sortie qui peut être fermée (38) du réservoir de stockage et le mouvement de transport du réservoir d'alimentation (51) sont adaptés l'un à l'autre.

14. Procédé selon l'une des revendications 11 à 13, **caractérisé en ce que** les aliments à cuire éjectés du réservoir de stockage (13) sont de préférence pesés dans le réservoir de transport (51).

15. Procédé selon l'une des revendications 11 à 14, **caractérisé en ce que** le poids des portions à fabriquer est entré dans un terminal (97) et la portion est mesurée par commande automatique d'une fermeture de l'ouverture de sortie (38) qui correspond à la quantité entrée.
